# EUROPEAN PATENT APPLICATION

(11) **EP 0 973 054 A2**
(43) Date of publication of application: **19.01.2000**
(21) Application number: 99304871.9
(22) Date of filing: 22.06.1999
(51) Int. Cl.: G02B 26/02

(54) **Compound optical switch and optical communication device using the compound optical switch**

(30) Priority: 13.07.1998 JP 19710098
(71) Applicant: ALPS ELECTRIC CO., LTD., Ota-ku Tokyo 145 (JP)
(72) Inventor: Kikuchi, Kimihiro, 78 Aza-higashitamagawa, Miyagi-ken (JP); Hattori, Atsunori, Miyagi-ken (JP); Someno, Yoshihiro, Miyagi-ken (JP)
(74) Representative: Kensett, John Hinton

(57) **Abstract**

Disclosed are a compound optical switch which makes it possible to transmit turning ON/OFF of a switch as an optical signal in a simple construction and which is most suitable when used to control a motor-vehicle-mounted device, etc., and an optical communication device using the compound optical switch. Formed in a case are mechanical switches equipped with a plurality of key tops, a first light guide and a second light guide which are opposed to each other, and a plurality of third light guides connecting the first and second light guides. The mechanical switch is equipped with a switch for cutting off or transmitting lights introduced into the third light guides in accordance with the movement of the key tops. At the junctions between the first and third light guides and between the third and second light guides, there are obliquely arranged a plurality of flat optical filters adapted to reflect lights of predetermined wavelength bands and to transmit other lights, light of a predetermined wavelength band incident on the third light guides being output to the second light guide through the switch corresponding to the key top operated.

## Description

The present invention relates to a compound optical switch which is used in a system driven by transmitting light signals and which is in particular suitable for use in a multiple communication system carried in a motor vehicle, and it relates to an optical communication device using the compound optical switch.

Recently, the number of electric parts and devices carried in a motor vehicle has increased, and power lines and communication wiring for them have become necessary. As a result, the proportion of their weight in the vehicle has increased. In view of this, a multiple communication system is used to unify the wiring systems to thereby achieve a reduction in weight.

Such a multiple communication system comprises a bus line consisting of an electric cable, a plurality of node stations connected to this bus line and equipped with CPU, actuators attached to the node stations, and a switch for switching input signals to the actuators (Japanese Patent Application No. 7-301613).

When such a multiple communication system is installed in a motor vehicle, predetermined data signals are supplied to a node station by a sensor for detecting the conditions of the doors and windows, which are peripheral equipment of the driver's seat, and by switches for adjusting the opening and closing of the windows and the mounting angle of the door mirror. Then, the node station supplies data signals regarding control operations to the bus line as needed, and transmits them to another node station, driving and controlling the actuator of this node station, such as a motor.

For example, the adjustment of the opening and closing of the doors and the power windows, which are peripheral equipment of the driver's seat, the angular position of the door mirror, etc. is effected through transmission of ON/OFF signals alone. Generally speaking, the switch for effecting this ON/OFF operation is a switch having electric contacts.

However, in a switch which performs ON/OFF switching by means of electric contacts, its metal portions may deteriorate through wear as a result of the ON/OFF switching or melting due to an arc generated during the ON/OFF switching. Thus, it has a problem in that its service life is rather short. This problem becomes more serious in the environment of the interior of a motor vehicle, in which the temperature and humidity are high.

Furthermore, an electrical noise can be generated by the arc generated during the ON/OFF switching and enter the electrical system of the car to cause incorrect operation.

The present invention has been made with a view toward solving the above problems. It is an object of the present invention to provide a compound optical switch carried in a motor vehicle having a simple construction and most suitable for effecting turning ON/OFF by an optical switch and transmitting light signals, and an optical communication device using the compound optical switch.

In a first aspect of the present invention, there is provided a compound optical switch comprising a common case, input and output side optical paths and a plurality of light guides connecting the optical paths which are arranged in the common case, switches provided in the light guides and adapted to selectively cut off or transmit introduced light, and a plurality of optical filters provided at the junction points of the input side optical path and the light guides and of the output side optical path and the light guides and adapted to reflect lights of different wavelength bands and allow other lights to be transmitted.

In a second aspect of the present invention, there is provided a compound optical switch comprising a case, a mechanical switch equipped with a plurality of key tops, first and second light guides opposed to each other, and a plurality of third light guides connecting the first and second light guides, wherein the mechanical switch is equipped with switches for cutting off or transmitting light introduced into the third light guides in accordance with the movement of the key tops, and wherein there are provided a plurality of optical filters arranged at the junction points of the first and third light guides and of the third and second light guides and adapted to reflect lights of predetermined different wavelength bands and to transmit other lights, lights of predetermined wavelength bands incident on the third light guides being emitted to the second light guide through the switches corresponding to the key tops that are operated.

In a third aspect of the present invention, there is provided an optical communication device comprising an optical fiber, a compound optical switch arranged through the intermediation of the optical fiber, and a receiving section, wherein the receiving section includes a plurality of optical filters for selectively demultiplexing lights of different predetermined wavelength bands transmitted through the optical fiber and photoreceptors for receiving the lights demultiplexed by the optical filters.

### BRIEF DESCRIPTION OF THE DRAWINGS

Fig. 1 is a plan view of a motor-vehicle-mounted compound optical switch according to an embodiment of the present invention;
Fig. 2 is a side view of a motor-vehicle-mounted compound optical switch according to an embodiment of the present invention;
Fig. 3 is a sectional view taken along the line 3-3 of the motor-vehicle-mounted compound optical switch shown in Fig. 2;
Fig. 4 is an enlarged partial sectional view of the compound optical switch shown in Fig. 3;
Fig. 5 is a sectional view taken along the line 4-4 of the compound optical switch shown in Fig. 3;
Fig. 6 is a diagram illustrating the ON/OFF operation of a compound optical switch according to an embodiment of the present invention; and
Fig. 7 is a schematic diagram showing a modification of the receiving section of an optical communication device using a compound optical switch according to an embodiment of the present invention.

### DESCRIPTION OF THE PREFERRED EMBODIMENT

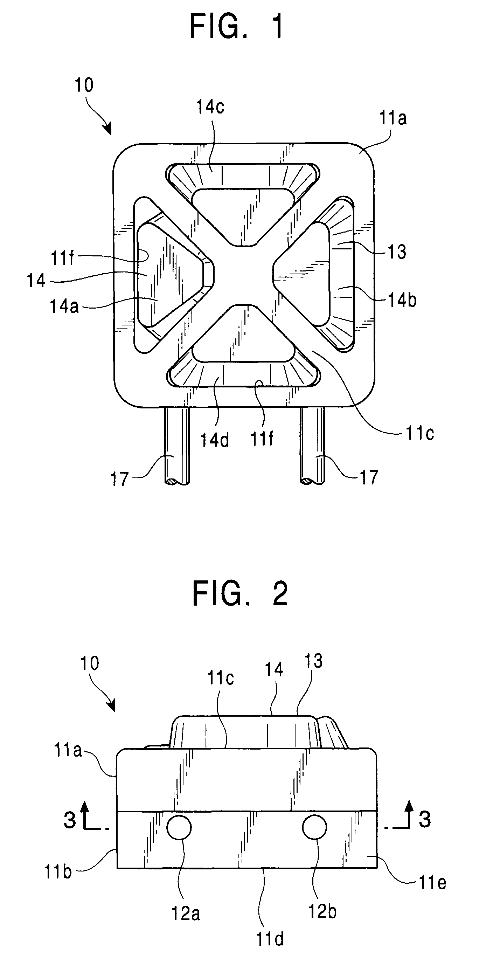

A compound optical switch for adjusting the angular position of a door mirror according to an embodiment of the present invention will now be described with reference to Figs. 1 through 5.

Fig. 1 is a plan view of a compound optical switch 10, and Fig. 2 is a side view thereof.

As shown in Fig. 1, the compound optical switch 10 includes a box-like case 11, which is formed of a synthetic resin or metal which does not allow light to be transmitted. The case 11 is composed of upper case 11a serving as a cover and a lower case 11b. The upper case 11a includes a top plate 11c, which has four triangular openings 11f.

Mechanical switches 13 are accommodated in the upper case 11a of the case 11. Key tops 14 constituting the mechanical switches 13 partially protrude beyond the openings 11f.

As shown in Fig. 2, the lower case 11b is equipped with a bottom plate 11d, and four side walls 11e perpendicular to the bottom plate 11d. Round holes 12a and 12b are formed in one of the side walls 11e. End portions of optical fibers 17 are connected to the round holes 12a and 12b.

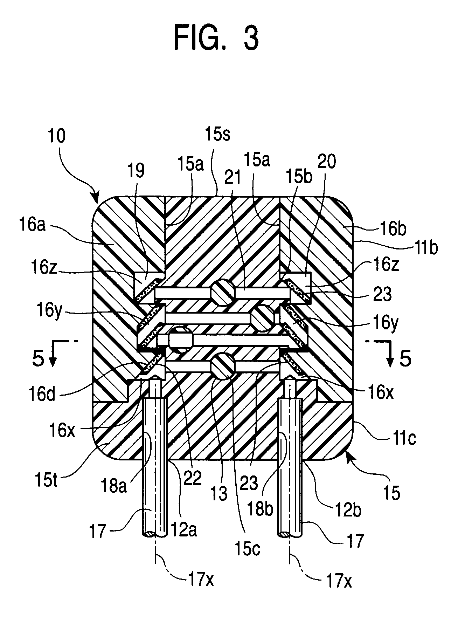

Fig. 3 is a sectional view taken along the line 3-3 of the compound optical switch 10 shown in Fig. 2.

The lower case 11b is composed of a base 15 having a T-shaped sectional configuration, and two holding portions 16a and 16b secured to either side of the base 15 by an adhering means or the like.

The base 15 is formed as an integral unit comprising a main body 15s formed as a rectangular parallelepiped and rectangular portions 15t attached to the side walls 15a of the main body 15s so as to be perpendicular thereto.

In the rectangular portions 15t, there are formed fiber inserting portions 18a and 18b which are connected to the round holes 12a and 12b and in which optical fibers 17 are inserted.

In the main body 15s, four third light guides 21 are arranged parallel to each other so as to extend through the side walls 15a so as to be in the same plane (the line 3-3) as the optical fiber inserting portions 18a and 18b.

The mechanical switches 13 are arranged in the third light guides 21 so as to intersect the third light guides 21.

As shown in Fig. 3, cutouts are formed in each of the side walls 15a of the holding portions 16a and 16b so as to form spaces 16x, 16y, and 16z. Four first optical filters 22 and four second optical filters 23 are arranged in these spaces.

Next, the mounting of the first optical filters 22 of the compound optical switch 10 will be described in detail.

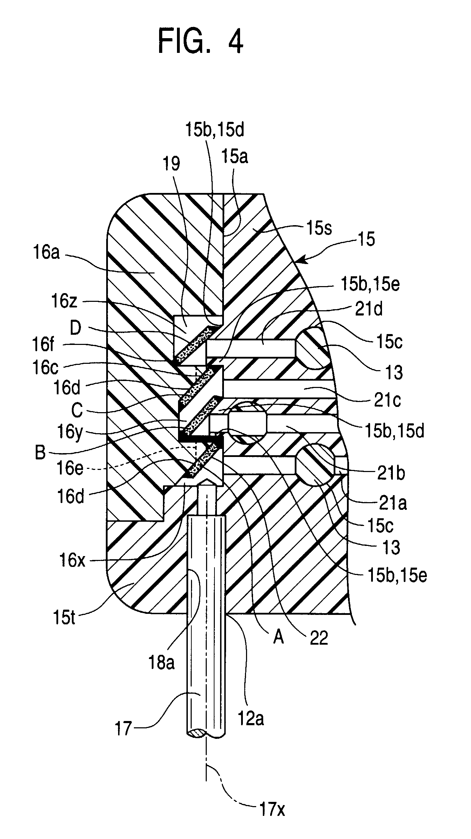

Fig. 4 is a partial enlarged sectional view of the compound optical switch 10 shown in Fig. 3.

As shown in Fig. 4, four third light guides 21a, 21b, 21c, and 21d are arranged in that order from the side nearest the fiber inserting portions 18a and 18b.

On the side wall 15a of the main body 15s and at the ends of the third light guides 21b and 21d, there are formed protrusions 15b on either side of the light guides 21b and 21d. Some of the protrusions 15b have an inclined surface 15d and the others have a flat surface 15e.

The end portion of the third light guide 21a is flush with the side wall 15a where there are no protrusions 15b.

At one end of the third light guide 21c, the inclined surface 15d of the third light guide 21b is adjacent to one side of the light guide 21c, and the other side thereof is flush with the side wall 15a.

When the holding portion 16a is attached to the base 15, it defines the three spaces 16x, 16y, and 16z between it and the side wall 15a of the base 15.

These three spaces 16x, 16y, and 16z are defined by step portions 16c which face the spaces 16x, 16y, and 16z and which have inclined surfaces 16d which are oblique to the longitudinal extensions of the third light guides 21a and 21c.

Through-holes 16e, which are in line with the extension of the axis of the optical fiber 17 arranged in the fiber inserting portion 18a, are formed in the step portions 16c so as to extend through them.

In this way, a first light guide 19 connecting the three spaces 16x, 16y, and 16z is formed.

When the holding portions 16a and 16b are attached to the base 15, the forward ends of the step portions 16c abut the flat surfaces 15e of the protrusions 15b of the main body 15s.

Next, the first optical filters 22 consist of four filters A, B, C, and D. The filter A reflects green light (wavelength λ1 from 498 to 530 nm), the filter B reflects blue light (wavelength λ2 from 467 to 483 nm), the filter C reflects red light (wavelength λ3 from 650 to 700 nm), and the filter D reflects orange light (wavelength λ4 from 586 to 597 nm). Lights of other wavelength bands are allowed to be transmitted through the filters.

The filter A is accommodated in the space 16x, the filters B and C are accommodated in the space 16y, and the filter D is accommodated in the space 16z. The filters C and A are firmly attached to inclined surfaces 16d by adhesive or the like, and the filters D and B are attached to the inclined surfaces 15d of the main body 15 and to right-angled corners 16f made by the holding portion 16a and the step portions 16c by adhesive or the like.

Next, when the holding portion 16b of a similar construction is attached to the base 15, three spaces 16x, 16y, and 16z are defined, and through-holes (not shown) are formed in the holding portion, whereby a second light guide 20 connecting these spaces 16x, 16y, and 16z is formed. Filters A, B, C, and D which are the same as the first optical filters 22 are provided as second optical filters 23, which are opposed to the first optical filters A, B, C, and D, with the third light guides 21a, 21b, 21c, and 21d therebetween.

Due to this construction, of the white light of a wide wavelength band incident on the first light guide 19 from one end of the optical fiber 17 attached to the fiber inserting portion 18a, green light having a wavelength λ1 is reflected at right angles by the first optical filter A, and output to the third light guide 21a connected substantially at right angles to the first light guide 19.

The green light incident on the third light guide 21a is output to the second light guide 20, and reflected at right angles by the second optical filter A before it is output to the optical fiber 17 attached to the optical fiber inserting portion 18b.

Lights of other wavelength bands are transmitted through the first optical filter A, and pass through the through-holes 16e before they are output to the first optical filters B, C, and D. The first optical filters B, C, and D divide the lights into blue light having a wavelength λ2, red light having a wavelength λ3, and orange light having a wavelength λ4, which are respectively reflected onto the third light guides 21b, 21c, and 21d. Then, they pass through the third light guides 21b, 21c, and 21d before they are output to the second optical filters B, C, and D arranged in the second light guide 20.

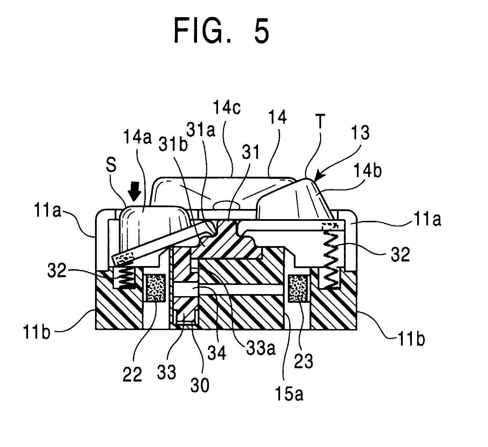

Next, the mechanical switches 13 will be described with reference to Fig. 5.

As shown in Fig. 5, each mechanical switch 13 comprises four resin key tops 14 arranged in four directions, a substantially cylindrical support member 31 supporting these key tops 14, and a switch 30 arranged at the bottom of the key tops 14. Further, the mechanical switch 13 is equipped with coil springs 32 elastically supporting part of the key tops 14.

The key tops 14 consist of first key tops 14a and 14b arranged on the left-hand side and the right-hand side as seen in the drawing, a second key top 14c arranged behind them, and a second key top 14d (See Fig. 1).

The first key tops 14a and 14b are used to adjust horizontal angular position, and the second key tops 14c and 14d are used to adjust vertical angular position.

The support member 31 is equipped with a groove portion 31a supporting part of the key tops 14 and a protruding portion 31b formed on the substantially cylindrical side wall portion thereof. It is arranged on the back side of the central portion of the top plate 11c.

The switch 30 is equipped with a movable portion 33 which can reciprocate and which is cylindrical, and a spring member (not shown) arranged at the bottom of a space 15c in which this movable portion 33 is arranged. The movable portion 33 is elastically supported by this spring member.

The movable portion 33 is equipped with a window portion 34 extending at right angles through the side wall thereof, and a cutout portion 33a formed by cutting out in L-shape the end portion abutting the bottom surface of the key top 14 of the movable portion 33. A part of the movable portion 33 abuts the bottom surface of the key top 14, and the cutout portion 33a abuts the protruding portion 31b of the support member 31.

When the first key top 14a of the mechanical switch 13 is depressed (as indicated by symbol S in the drawing), the key top 14 rotates against the resilient force of the coil spring 32 and the spring member using the groove portion 31a as a fulcrum, and the movable portion 33 is depressed, with the result that the window portion 34 of the movable portion 33 faces the third light guide 21. Next, when the depression of this key top 14a is canceled, the coil spring 32 and the spring member are restored to the former condition, and respectively push up the key top 14a and the movable portion 33 to the former positions (as indicated by symbol T in the drawing), the window portion 34 being detached from the light guide 21 to shield the light guide 21.

A part of the key top 14a abuts the back surface of the top plate 11c, and the protruding portion 31b of the support member 31 abuts the step portion 33a of the movable portion 33, whereby detachment prevention is achieved.

In this way, when the key top 14 is depressed, light of a specific wavelength is transmitted through the window portion 34 and output to another third light guide 21. When the depression of the key top is canceled, the light guide 21 is shielded by the side wall of the movable portion 33, and the light does not reach another light guide.

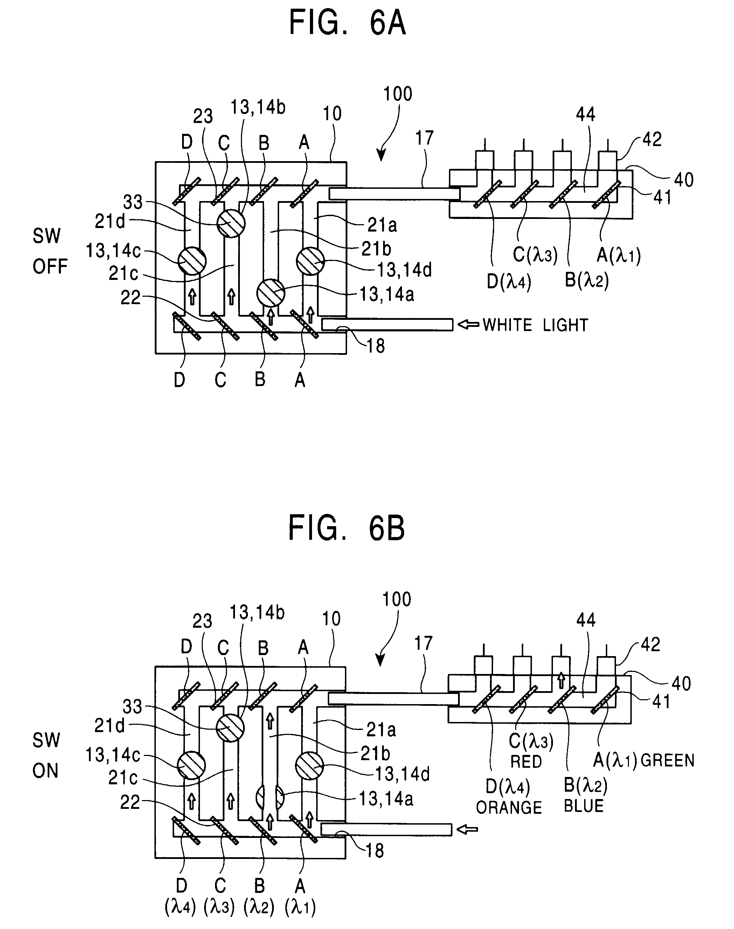

Next, the construction of a motor-vehicle-mounted optical communication device 100 using the compound optical switch 10 will be described with reference to Fig. 6.

As shown in Fig. 6, the motor-vehicle-mounted optical communication device 100 is equipped with the above-described compound optical switch 10 and a receiving section 40 for receiving light emitted from the compound optical switch 10, and comprises a light source (not shown) for constantly generating white light having a wide wavelength band, and the optical fibers 17 connecting the compound optical switch 10 and the receiving section 40 and transmitting white light to them.

The mechanical switches 13 arranged in the third light guides 21a, 21b, 21c, and 21d respectively correspond to the first key top 14d, the second key top 14a, the first key top 14b, and the second key top 14c.

The receiving section 40 comprises a linearly formed fourth light guide 44, third optical filters 41 inclined at 45 degrees, arranged at predetermined intervals and adapted to reflect light of specific wavelength bands, and photo detectors 42 adapted to convert the light reflected by the third optical filters 41 to electric signals.

As the third optical filters 41, there are arranged a filter D (which reflects orange light having a wavelength λ4 and allows other lights to be transmitted), a filter C (which reflects red light having a wavelength λ3 and allows other lights to be transmitted), a filter B (which reflects blue light having a wavelength λ2 and allows other lights to be transmitted), and a filter A (which reflects green light having a wavelength λ1 and allows other lights to be transmitted) in that order from the side nearest the mounting portion of the optical fiber 17.

Regarding the motor-vehicle-mounted optical communication device 100, constructed as described above, Fig. 6A is a diagram illustrating the operation when the compound optical switch 10 is in the OFF state, and Fig. 6B is a diagram illustrating the operation when it is in the ON state.

As shown in Fig. 6A, when all the key tops 14 are OFF, the movable portions 33 of the mechanical switches 13 arranged in the third light guides 21a, 21b, 21c, and 21d cut off the specific light incident at right angles on the third light guides 21a, 21b, 21c, and 21d from the first optical filters 22, and the lights are not output to the second optical filters 23.

Thus, the lights are not transmitted from the compound optical switch to the receiving section 40 through the optical fiber 17.

Next, as shown in Fig. 6B, when, for example, the first key top 14a is turned ON, the window portion 34 of the movable portion 33 moves to the third light guide 21b, so that blue light having a wavelength λ2 reflected by the first optical filter B is transmitted through the third light guide 21b through the window portion 34 and reflected at right angles by the second optical filter B. Then, the blue light having a wavelength λ2 reflected is allowed to be transmitted through the filter A and transmitted to the optical fiber 17 from the compound optical switch 10 before it impinges upon the receiving section 40.

Then, in the receiving section 40, the blue light is allowed to be transmitted through the optical filters 41 (the filters D and C) in the fourth light guide 44, and reflected at right angles by the optical filter 41 (the optical filter B) before it is converted to an electric signal by the photo detector 42 arranged forward. After the light is converted to an electric signal, a motor (not shown) causes the door mirror to move to the left by a predetermined angle in accordance with this electric signal.

In this way, the compound optical switch 10 is mounted in the switch for operating the door mirror of the motor vehicle, and lights of specific wavelength bands are respectively in correspondence with the four key tops 14, whereby it is possible to move the door mirror vertically or horizontally to a predetermined angular position through an actuator such as a motor.

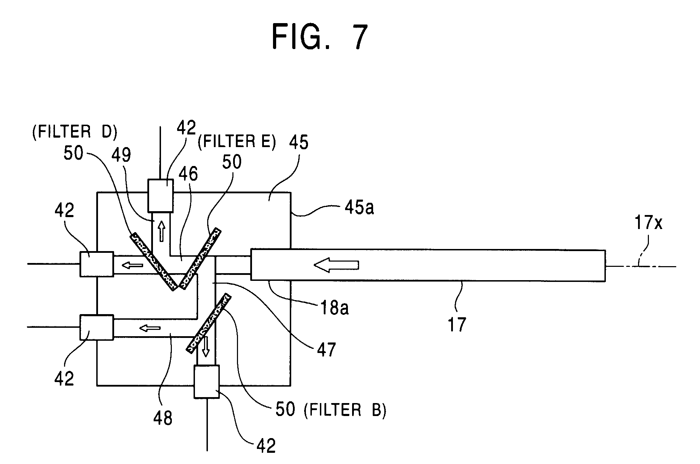

Next, the construction of a modification of the receiving section 40 of the present invention will be schematically described with reference to Fig. 7.

As shown in Fig. 7, a receiving section 45 is equipped with a case 45a, and a fiber inserting portion 18a formed perpendicularly to the side wall of the case 45a, and the optical fiber 17 is mounted and secured to this fiber inserting portion 18a.

Further, the receiving section 45 is equipped with a fifth light guide 46 formed in line with the extension 17x of the axis of the optical fiber inserting portion 18a, a sixth light guide 47 extending perpendicularly to the longitudinal direction of the fifth light guide 46 and branching off from near one end of the fiber inserting portion 18a, and a seventh light guide 48 branching off from the sixth light guide 47 so as to extend parallel to the fifth light guide 46. Further, there is formed an eighth light guide 49 branching off from the fifth light guide 46 and extending at right angles to the light guide 46 in a direction opposite to the sixth light guide 47.

The end portion of the eighth light guide 49 is formed so as to extend through a side wall (the upper wall as seen in the drawing) of the case 45a.

The end portions of the fifth and seventh light guides 46 and 48 are formed so as to extend through the side wall of the case 45a on the opposite side of the fiber inserting portion 18. The end portion of the sixth light guide 47 is formed so as to extend through a side wall (the lower wall as seen in the drawing) of the case 45a. Photo receptors 42 are mounted and secured to the positions of the case where these light guides extend through the walls.

Flat fourth optical filters 50 are arranged obliquely at the branching point between the fifth light guide 46 and the sixth light guide 47, the branching point between the sixth light guide 47 and the seventh light guide 48, and the branching point between the fifth light guide 46 and the eighth light guide 49.

The fourth optical filter 49 (filter E) arranged at the branching point between the fifth light guide 46 and the sixth light guide 47 reflects green light having a wavelength λ1 and blue light having a wavelength λ2, and allows other lights to be transmitted.

The optical filter 49 (filter D) arranged at the branching point between the fifth light guide 46 and the eighth light guide 49 reflects orange light having a wavelength λ4, and allows lights of other wavelength bands to be transmitted.

The optical filter 49 (filter B) arranged at the branching point between the sixth light guide 47 and the seventh light guide 48 reflects blue light having a wavelength λ2, and allows lights of other wavelength bands to be transmitted.

Thus, light incident on the receiving section 45 from the motor-vehicle-mounted compound switch 10 through the optical fiber 17 mounted to the fiber inserting portion 18a, for example, green light having a wavelength λ1 is reflected by the optical filter E and transmitted through the optical filter B before it impinges upon the photo detector 42 arranged in the sixth light guide 47.

Red light having a wavelength λ3 is transmitted through the two fourth optical filters E and D before it impinges upon the photo detector 42 arranged in the fifth light guide 46.

In the case of blue light having a wavelength λ2 and orange light having a wavelength λ4, they similarly impinge upon the photo detectors 42 arranged in the seventh light guide 48 and the eighth light guide 49, respectively.

In this way, the fourth optical filters 50 (filters D, B and E) are combined to form the receiving section 45, whereby it is possible to perform the necessary adjustment of the angular position of the door mirror in the vertical and horizontal directions in correspondence with the four key switches 14 of the compound optical switch 10.

Further, by mounting and securing the filter E which reflects (green and blue) lights of two wavelength bands and allows lights of other wavelength bands to be transmitted, it is possible to reduce the number of optical filters and the assembly is facilitated, whereby an improvement is achieved in terms of reliability.

In accordance with the present invention, there is provided a compound optical switch comprising a common case, input and output side optical paths and a plurality of light guides connecting the optical paths which are arranged in the common case, switches provided in the light guides and adapted to selectively cut off or transmit introduced light, and a plurality of optical filters provided at the junction points of the input side optical path and the light guides and of the output side optical path and the light guides and adapted to reflect lights of different wavelength bands and allow other lights to be transmitted, whereby it is possible to guide predetermined light to each light guide in a single case with no wavelength bands overlapping each other. Further, a multi-step connection of the light guides is effected in a single package, whereby a reduction in the size of the compound optical switch is achieved.

Further, there is provided a compound optical switch comprising a case, a mechanical switch equipped with a plurality of key tops, first and second light guides opposed to each other, and a plurality of third light guides connecting the first and second light guides, wherein the mechanical switch is equipped with switches for cutting off or transmitting light introduced into the third light guides in accordance with the movement of the key tops, and wherein there are provided a plurality of optical filters arranged at the junction points of the first and third light guides and of the third and second light guides and adapted to reflect lights of predetermined different wavelength bands and to transmit other light, lights of predetermined wavelength bands incident on the third light guides being emitted to the second light guide through the switches corresponding to the key tops that are operated, so that lights are cut off or transmitted solely by turning ON/OFF the mechanical switch, whereby an improvement in durability and reliability is achieved without using electric contacts.

Further, there is provided an optical communication device comprising an optical fiber transmitting light of a wide wavelength band, a compound optical switch arranged through the intermediation of the optical fiber, and a receiving section, wherein the receiving section includes a plurality of optical filters for selectively demultiplexing lights of different predetermined wavelength bands transmitted through the optical fiber and photoreceptors for receiving the lights demultiplexed by the optical filters, so that it is possible to transmit lights of predetermined wavelength bands to the receiving section, where the lights are received, whereby it is possible to reliably drive the door mirror of an automobile, and it is possible to perform predetermined driving with higher reliability without causing incorrect operation of other electrical systems of the vehicle by electrical noise.

## Claims

1. A compound optical switch comprising a common case, input and output side optical paths and a plurality of light guides connecting the optical paths which are arranged in the common case, switches provided in the light guides and adapted to selectively cut off or transmit introduced light, and a plurality of optical filters provided at the junction points of the input side optical path and the light guides and of the output side optical path and the light guides and adapted to reflect lights of different wavelength bands and allow other lights to be transmitted.

2. A compound optical switch comprising a case, a mechanical switch equipped with a plurality of key tops, first and second light guides opposed to each other, and a plurality of third light guides connecting the first and second light guides, wherein the mechanical switch is equipped with switches for cutting off or transmitting light introduced into the third light guides in accordance with the movement of the key tops, and wherein there are provided a plurality of optical filters arranged at the junction points of the first and third light guides and of the third and second light guides and adapted to reflect lights of predetermined different wavelength bands and to transmit other lights, lights of predetermined wavelength bands incident on the third light guides being emitted to the second light guide through the switches corresponding to the key tops that are operated.

3. An optical communication device comprising an optical fiber, a compound optical switch arranged through the intermediation of the optical fiber, and a receiving section, wherein the receiving section includes a plurality of optical filters for selectively demultiplexing lights of different predetermined wavelength bands transmitted through the optical fiber and photoreceptors for receiving the lights demultiplexed by the optical filters.
